Europäisches Patentamt

European Patent Office

Office européen des brevets

(11) Veröffentlichungsnummer: **0 315 998**
**A2**

## (12) EUROPÄISCHE PATENTANMELDUNG

(21) Anmeldenummer: **88118773.6**

(51) Int. Cl.4: **H02K 17/42**

(22) Anmeldetag: **11.11.88**

(30) Priorität: 11.11.87 DE 3738213
13.09.88 DE 3831114

(43) Veröffentlichungstag der Anmeldung:
**17.05.89 Patentblatt 89/20**

(84) Benannte Vertragsstaaten:
**AT BE CH DE ES FR GB GR IT LI LU NL SE**

(71) Anmelder: **Däumling, Siegfried**
**Moosheimerstrasse 8/1**
**D-7968 Saulgau(DE)**

(72) Erfinder: **Däumling, Siegfried**
**Moosheimerstrasse 8/1**
**D-7968 Saulgau(DE)**

(74) Vertreter: **Patentanwälte Dipi.-Ing. E. Eisele**
**Dr.-Ing. H. Otten**
**Seestrasse 42**
**D-7980 Ravensburg(DE)**

(54) **Asynchrongenerator mit einer Ständerwicklung mit Anzapfungen.**

(57) Bei einem Asynchrongenerator mit einer Ständerwicklung, deren Wicklungsstränge aus je zwei in Reihe geschalteten Spulengruppen (S1 bis S3, S1′ bis S3′) bestehen, deren Verbindungsstellen als Anzapfungen ausgebildet sind, wird die induktive Belastbarkeit dadurch nachhaltig erhöht, daß jede Spulengruppe die Hälfte der vorhandenen Pole umfaßt und daß die Anzapfungen (U2, V2, W2) miteinander verbunden sind, während an den einander zugeordneten Strangenden wenigstens einer Seite der Wicklung Kondensatoren (C1 bis C3) angeschlossen sind. Die Spulengruppen (z. B. S1 und S1′) können unterschiedliche Wicklungsdaten und Anzapfungen zur Abnahme verschiedener Verbraucherspannungen haben. Stator Blechpaket und Rotor entsprechen vorzugsweise denen normaler Asynchronmotoren.

FIG. 1

## Asynchrongenerator mit einer Ständerwicklung mit Anzapfungen

Die Erfindung betrifft einen Asynchrongenerator mit einer Ständerwicklung, deren Wicklungsstränge aus je zwei in Reihe geschalteten Spulengruppen bestehen, deren Verbindungsstellen als Anzapfungen ausgebildet sind. Üblicherweise sind Asynchrongeneratoren dreiphasig und weisen dementsprechend drei Wicklungsstränge auf. Zur Erzeugung des Magnetisierungsstromes sind Kondensatoren angeschlossen. Der Läufer kann ein üblicher Käfigläufer sein.

Ein Asynchrongenerator der einleitend bezeichneten Art ist aus der DE-AS 10 75 731 bekannt. Die drei Wicklungsstränge sind in Stern geschaltet. Drei Kondensatoren liegen zwischen den Strangenden. An den drei Anzapfungen sind Drehstromverbraucher angeschlossen. Aus der DE-OS 24 00 698 ist auch ein Asynchrongenerator mit zwei getrennten Ständerwicklungen bekannt. An der einen Wicklung sind Kondensatoren und an der anderen die Verbraucher angeschlossen.

Mit den bisher bekannten Asynchrongeneratoren konnte jedoch die der Maschinengröße entsprechende Leistung bei induktiver Belastung nicht erreicht werden. Wenn man die rein ohm'sche Nennleistung bekannter Asynchrongeneratoren mit 100 % ansetzt, dann ist festzustellen, daß schon bei 30 bis 40 %iger induktiver Belastung die Spannung total zusammenbricht.

Der Erfindung liegt die Aufgabe zugrunde, einen Asynchrongenerator vorzuschlagen, der eine wesentlich höhere induktive Belastung gewährleistet.

Diese Aufgabe wird ausgehend von einem Asynchrongenerator der einleitend bezeichneten Art erfindungsgemäß dadurch gelöst, daß jede Spulengruppe die Hälfte der vorhandenen Pole umfaßt und daß die Anzapfungen miteinander verbunden sind, während an den einander zugeordneten Strangenden wenigstens an einer Seite der Wicklung Kondensatoren angeschlossen sind.

Wesentlich ist, daß der Sternpunkt in der Mitte der Wicklung liegt. Es werden dadurch zwei dreiphasige Wicklungsteile gebildet, von denen der eine Teil als Erregerwicklung dient und der andere Teil als Lastwicklung. Auch an dem Lastwicklungsteil, somit also an beiden Enden der Wicklungsstränge, können Kondensatoren angeschlossen sein. Mit dieser Schaltung ist eine wesentlich höhere induktive Belastung als bei bekannten Asynchrongeneratoren möglich, ein typischer Wert liegt bei ca. 70 % unter Zugrundelegung der oben angegebenen Berechnungsmethode. Wesentlich ist auch, daß sich bei induktiver Belastung eine konstante Verbraucherspannung ergibt. Die Wicklung kann in üblicher Weise als Einschicht- oder Zweischichtwicklung ausgeführt sein.

Die Polzahl spielt keine Rolle, d. h. die Vorteile treten bei Maschinen mit allen möglichen Polzahlen auf. Die vorgeschlagene Asynchronmaschine eignet sich daher u. a. als Frequenzumformer, z. B. im industriellen Bereich, wo häufig mit Hochfrequenz betriebene Handwerkzeugmaschinen verwendet werden. Beispielsweise liefert eine mit 3.000 Umdrehungen/Min. angetriebene achtpolige Asynchronmaschine eine Verbraucher-Netzfrequenz von 200 Hz.

Um die Möglichkeit zu schaffen, Verbraucher mit unterschiedlichen Ausgangsspannungen zu speisen, wird vorgeschlagen, daß die Spulengruppen eines Stranges unterschiedliche Windungszahlen und Drahtstärken aufweisen. Zum gleichen Zweck ist es aber auch möglich, daß wenigstens eine der verbraucherseitigen Spulengruppen Anzapfungen aufweist.

Vorzugsweise wird für den Asynchrongenerator das Statorblechpaket eines normalen Asynchronmotors verwendet. Der Läufer kann ein Käfiganker sein, wie er ebenfalls für Asynchronmotoren verwendet wird.

Ausführungsbeispiele der Erfindung werden nachfolgend anhand der Zeichnung beschrieben. Im einzelnen zeigt

Fig. 1 das Schaltbild eines Asynchrongenerators mit Kondensatoren an einer Wicklungsseite,

Fig. 2 das Schaltbild des Asnynchrongenerators nach Fig. 1 mit Kondensatoren auch an der Verbraucherseite,

Fig. 3 das Wickel- und Schaltschema einer vierpoligen Einschichtwicklung und

Fig. 4 das Wickel- und Schaltschema einer vierpoligen Zweischichtwicklung.

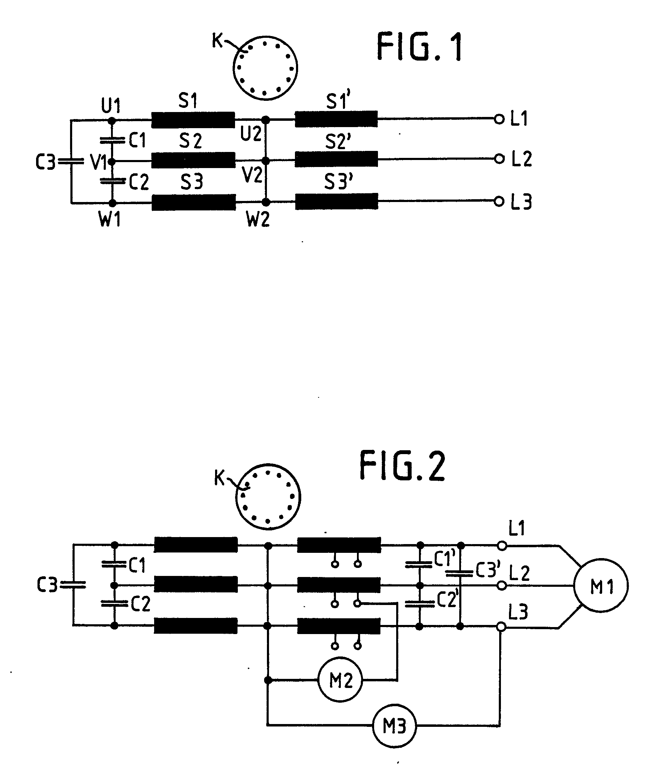

Wie Fig. 1 zeigt, hat die Ständerwicklung drei Stränge, jeder bestehend aus zwei in Reihe geschalteten Spulengruppen S1 und S1', S2 und S2', S3 und S3'. Die mit U2, V2 und W2 bezeichneten Verbindungsstellen zwischen den jeweiligen Spulengruppen sind in Wirklichkeit als Anzapfungen ausgebildet und zum Klemmbrett herausgeführt.

Dort sind sie durch Brücken miteinander verbunden. Die Spulengruppen S1 bis S3 bilden die Erregerwicklung. Die entsprechenden Strangenden heißen U1, V1 und W1. Sie sind im Dreieck mit Kondensatoren C1, C2 und C3 beschaltet. Die Spulengruppen S1' bis S3' bilden die Lastwicklung. Die entsprechenden Enden heißen L1, L2 und L3. Der hierzu gehörige Käfiganker ist schematisch angedeutet und mit K bezeichnet.

In Fig. 2 ist dieselbe Maschine durch Kondensatoren C1′, C2′ und C3′ am lastseitigen Ausgang ergänzt. Ferner haben die Spulengruppen S1′ bis S3′ je zwei Anzapfungen. In strichpunktierter Darstellung ist beispielweise angedeutet, wie ein Drehstromverbraucher M1, ein Wechselstromverbraucher M2 kleinerer Spannung und ein Wechselstromverbraucher M3 größerer Spannung angeschlossen werden könnte.

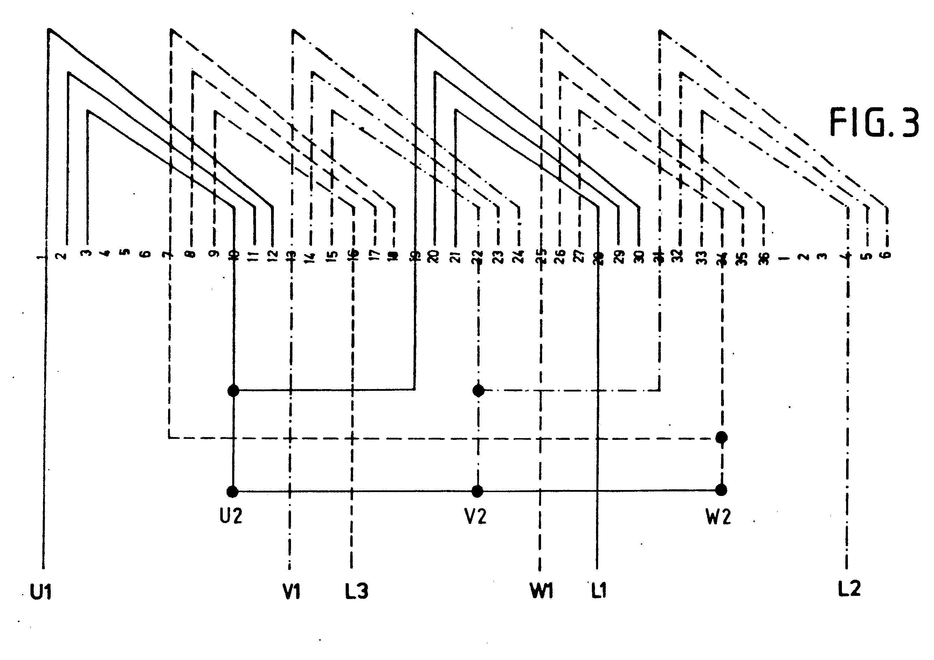

Fig. 3 zeigt einen Ständer mit sechsunddreißig Nuten und eine Einschichtwicklung in Dreiloch-Ausführung. Jede Spulengruppe besteht aus drei konzentrischen Spulen. Die Bezeichnungen der Spulengruppenenden stimmen mit Fig. 1 überein.

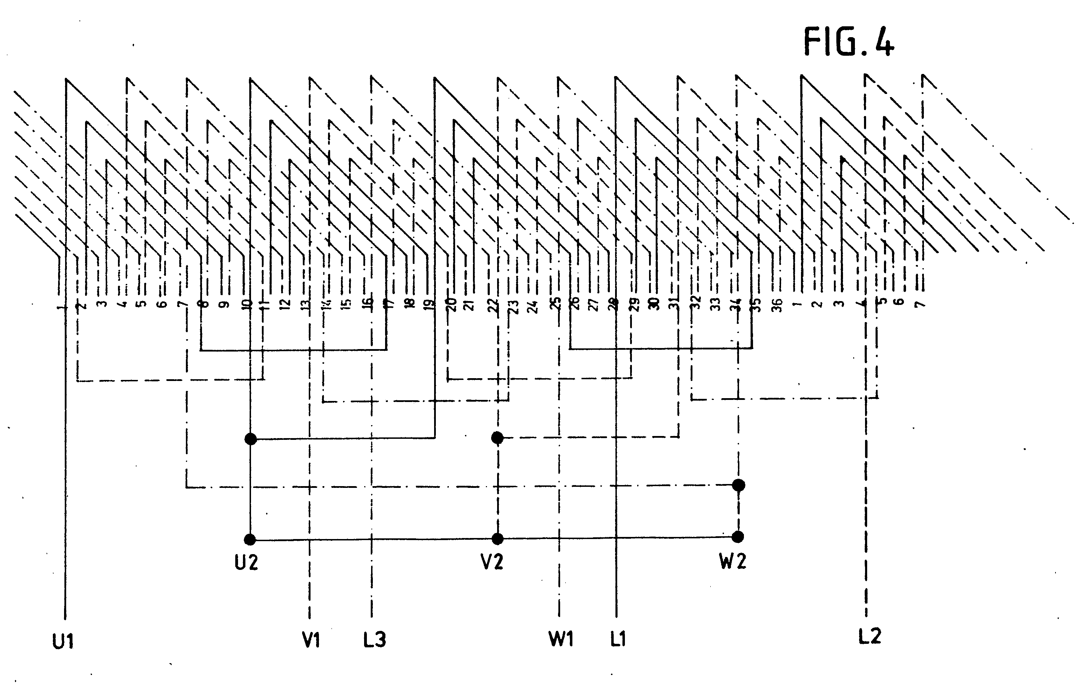

In Fig. 4 ist eine ebenfalls vierpolige Zweischichtwicklung gezeigt. Hier besteht jede Spulengruppe aus zwei in Reihe geschalteten Einzelgruppen mit entgegengesetzter Stromlaufrichtung, jede aus drei konzentrischen Spulen. Auch hier sind die gleichen Anschlußbezeichnungen verwendet.

**Ansprüche**

1. Asynchrongenerator mit einer Ständerwicklung, deren Wicklungsstränge aus je zwei in Reihe geschalteten Spulengruppen bestehen, deren Verbindungsstellen als Anzapfungen ausgebildet sind, dadurch gekennzeichnet, daß jede Spulengruppe (S1 bis S3, S1′ bis S3′) die Hälfte der vorhandenen Pole umfaßt und daß die Anzapfungen (U2, V2, W2) miteinander verbunden sind, während an den einander zugeordneten Strangenden wenigstens einer Seite der Wicklung Kondensatoren (C1 bis C3 bzw. C1′ bis C3′) angeschlossen sind.

2. Asynchrongenerator nach Anspruch 1, dadurch gekennzeichnet, daß die Spulengruppen (z. B. S1 und S1′) eines Stranges unterschiedliche Windungszahlen und Drahtstärken aufweisen.

3. Asynchrongenerator nach Anspruch 1, dadurch gekennzeichnet, daß wenigstens eine der Spulengruppen (S1′) Anzapfungen zur Abnahme verschiedener Verbraucherspannungen aufweist.

4. Asynchrongenerator nach einem der vorhergehenden Ansprüche, dadurch gekennzeichnet, daß das Statorblechpaket das eines normalen Asynchronmotors ist.

5. Asynchrongenerator nach einem der vorhergehenden Ansprüche, dadurch gekennzeichnet, daß der Läufer ein Käfiganker (K) ist.

FIG.1

FIG.2

FIG.3

EP 0 315 998 A2

U1          V1   L3         W1   L1         L2

U2          V2          W2

FIG.4

EP 0 315 998 A2